Europäisches Patentamt

European Patent Office

Office européen des brevets

(19)

(11) Numéro de publication : **0 107 589**
**B1**

(12) ## FASCICULE DE BREVET EUROPÉEN

(45) Date de publication du fascicule du brevet :
09.09.87

(51) Int. Cl.⁴ : **G 11 B 5/127**

(21) Numéro de dépôt : **83402029.9**

(22) Date de dépôt : **19.10.83**

(54) Dispositif d'écriture d'informations sur un support magnétique.

(30) Priorité : 22.10.82 FR 8217730

(43) Date de publication de la demande :
02.05.84 Bulletin 84/18

(45) Mention de la délivrance du brevet :
09.09.87 Bulletin 87/37

(84) Etats contractants désignés :
DE FR GB IT NL

(56) Documents cités :
EP-A- 0 098 358
DE-A- 2 552 694
DE-A- 2 658 956
US-A- 3 243 788
US-A- 3 313 889
US-A- 4 222 084
US-A- 4 277 809
PATENTS ABSTRACTS OF JAPAN, vol. 5, no. 84 (P-64)[756], 2 juin 1981
IBM TECHNICAL DISCLOSURE BULLETIN, vol. 9, no. 7, décembre 1966, pages 776-777, Armonk, New York, US; J.L.DAWSON et al.: "Edge effect magnetic recording"
PATENTS ABSTRACTS OF JAPAN, vol. 5, no. 42 (P-53)[714], 20 mars 1981, page 23 P 53
PATENTS ABSTRACTS OF JAPAN, vol. 5, no. 5 (P-44)[677], 14 janvier 1981
PATENTS ABSTRACTS OF JAPAN, vol. 3, no. 28 (E-96), 9 mars 1979, page 50 E 96

(73) Titulaire : CII HONEYWELL BULL
94 Avenue Gambetta P.C. OW009
F-75020 Paris (FR)

(72) Inventeur : Gueugnon, Catherine
22 Rue Servandoni
F-75006 Paris (FR)
Inventeur : Desserre, Jacques
12 bis rue de la Mairie Orcemont
F-78120 Rambouillet (FR)
Inventeur : Bernstein, Pierre
8 Place Stalingrad
F-92190 Meudon (FR)

(74) Mandataire : Gouesmel, Daniel et al
BULL S.A. Industrial Property Department 25 avenue de la Grande-Armée
F-75016 Paris (FR)

Jouve, 18, rue St-Denis, 75001 Paris, France

## Description

La présente invention concerne un dispositif d'écriture d'informations sur un support magnétique. Elle est notamment applicable à l'écriture à haute densité surfacique d'informations sur les disques magnétiques des mémoires magnéto-optiques utilisées principalement dans les systèmes de traitement de l'information.

On sait que, dans les systèmes de traitement de l'information, le résultat des opérations effectuées par l'unité centrale de ces systèmes est soit utilisé et analysé immédiatement par l'utilisateur de ceux-ci, soit emmagasiné, pour des périodes de temps variables, dans des mémoires, appelées fréquemment « mémoires de masse ». Parmi les mémoires de masse utilisées, on compte notamment les mémoires à disques magnétiques.

Dans celles-ci, les informations sont portées par des disques magnétiques, et sont contenues à l'intérieur de pistes d'enregistrement concentriques circulaires qui ont une largeur radiale de l'ordre d'une dizaine de microns ou plus et qui couvrent généralement la majeure partie de leurs deux faces.

Généralement, une suite d'informations magnétiques écrites sur une piste d'un disque se présente sous la forme d'une succession de petits domaines magnétiques appelés « domaines élémentaires » répartis sur toute la longueur de la piste et ayant des inductions magnétiques de même module et de sens opposé.

On définit la densité linéique comme le nombre de changements de sens de magnétisation par unité de longueur mesurée suivant la circonférence d'une piste alors qu'on appelle densité radiale le nombre de pistes par unité de longueur mesurée suivant le diamètre du disque.

On appelle densité surfacique, le nombre d'informations par unité de surface.

On appelle pour simplifier transducteurs, les moyens qui permettent soit d'écrire (on dit également enregistrer) les informations sur les disques soit de les lire soit enfin de réaliser l'une et l'autre de ces deux fonctions. A une face d'un disque donnée, on associe généralement un ou plusieurs transducteurs, le disque défilant devant celui-ci ou ceux-ci.

Dans le développement des mémoires à disques magnétiques, l'une des tendances actuelles est de s'orienter vers l'étude des mémoires magnéto-optiques où les informations sont écrites sur des disques magnétiques, la lecture étant effectuée par un ensemble de dispositifs optoélectroniques permettant chacun d'observer à un moment donné, en un endroit donné, une face d'un disque au moyen d'un faisceau de lumière polarisée et de délivrer un signal électrique dont la tension ou courant est fonction de la valeur des informations situées à cet endroit. Ce signal est fourni par au moins un transducteur photoélectrique recevant la lumière polarisée du faisceau dont les propriétés sont modifiées au contact de la face du disque de telle sorte que, par exemple, si le faisceau vient au contact d'un domaine magnétique d'aimantation négative, le transducteur photoélectrique délivre un signal de tension non nulle, alors que si le faisceau vient au contact d'un domaine d'aimantation négative, le transducteur délivre un signal de tension nulle.

Dans ces mémoires on cherche à obtenir des densités radiale et linéique de l'ordre respectivement de 5 000 pistes par centimètre et de 10 000 changements de sens de magnétisation par centimètre.

Le mode d'écriture (d'enregistrement) d'informations choisi pour les disques magnétiques des mémoires magnéto-optiques est tel que l'aimantation dans les domaines élémentaires est perpendiculaire à la couche magnétique d'enregistrement du disque. On montre en effet, que ce type d'aimantation permet d'obtenir de plus grandes densités longitudinale et radiale d'informations et que son mode d'observation par un faisceau de lumière est plus facile que le mode d'observation d'un milieu où l'aimantation est longitudinale c'est-à-dire parallèle à la surface de la couche. Ce mode d'enregistrement des informations est appelé « mode d'enregistrement perpendiculaire ». Dans ce cas, le milieu magnétique constituant la couche est un milieu magnétique anisotrope, c'est-à-dire un milieu présentant une ou plusieurs directions privilégiées de magnétisation (ou d'aimantation) appelées également « direction de facile aimantation ». Dans les mémoires magnéto-optiques, l'un des modes d'écriture des informations consiste à utiliser des transducteurs magnétiques généralement composés d'un circuit magnétique autour duquel est disposé un enroulement et qui comporte un entrefer. La variation de l'induction à l'intérieur de l'entrefer permet l'écriture des informations contenues sur le support associé à ce transducteur.

On voit donc, que le dispositif d'enregistrement des informations sur les disques magnétiques des mémoires magnéto-optiques est constitué le plus fréquemment par l'association d'une couche magnétique d'enregistrement du disque magnétique, et d'un transducteur magnétique disposé en regard de celle-ci, son entrefer étant à une distance très faible de la surface de la couche, comprise (par exemple) entre zéro et quelques dixièmes de microns.

Dans les dispositifs d'écriture à très haute densité surfacique d'informations de ce type, on utilise de préférence des transducteurs magnétiques intégrés. On trouve la description d'un tel transducteur magnétique intégré, par exemple dans la demande de brevet français n° 78 17 641 déposée le 13 Juin 1978 sous le titre « support d'informations magnétiques à enregistrement perpendiculaire » par la Compagnie Internationale pour l'Informatique CII Honeywell Bull dont l'inventeur est M. Jean-Pierre Lazzari.

Ce transducteur magnétique intégré comprend deux pièces polaires réalisées en couches magnétiques minces et disposées d'un même côté du support d'informations en présentant au voisinage de celui-ci un entrefer. Les pièces polaires enserrent un bobinage électrique formé de couches minces conductrices superposées et séparées les unes des autres par des couches minces isolantes. Par rapport au support d'enregistrement, l'entrefer du transducteur magnétique intégré est disposé de telle sorte que sa grande dimension soit perpendiculaire à la direction du défilement du support. On peut dire que le transducteur défile devant le support perpendiculairement au plan des deux couches magnétiques constituant les pièces polaires. Lors de ce défilement, tout domaine magnétique d'une piste du support en regard duquel le transducteur est disposé, passe successivement dans le temps en regard de la première pièce polaire appelée « pièce polaire amont » et de la seconde appelée « pièce polaire aval ». De préférence, si l'on appelle « épaisseur des pièces polaires » la dimension de celles-ci mesurée parallèlement au sens de défilement, l'épaisseur de la pièce polaire aval est sensiblement inférieure à l'épaisseur de la pièce polaire amont.

L'écriture des informations sur le support est effectuée en faisant défiler le support à une vitesse donnée et en faisant traverser le bobinage par un courant variable représentatif des informations à écrire. Ce courant provoque la génération d'un flux magnétique dans les pièces polaires qui se ferme à travers la couche magnétique du support d'informations. En regard de la pièce polaire aval, le flux magnétique est concentré à cause de la faible épaisseur de celle-ci. Comme l'axe de facile aimantation de la couche d'informations est perpendiculaire à la surface de la couche magnétique d'enregistrement, le champ magnétique en regard de la pièce polaire aval, est canalisé dans cette direction. En regard de la pièce polaire amont, le champ magnétique se disperse et a une intensité beaucoup moins grande que le champ magnétique en regard de la pièce polaire aval. Ceci permet de ne pas saturer la couche magnétique d'informations au niveau de la pièce polaire amont et cela permet à la pièce polaire aval d'écrire les informations dans de meilleures conditions. En résumé, il est clair, que dans ce dispositif d'écriture à haute densité selon l'art antérieur, seule la pièce polaire aval définit la nature des informations enregistrées sur le support, c'est-à-dire notamment le sens et le module de l'induction magnétique dans chacun des domaines créés sur celui-ci. (On montre que ceci reste également vrai dans le cas où les pièces polaires « aval » et « amont » ont sensiblement la même épaisseur).

On voit donc que, tout en possédant deux pièces polaires (on dit également deux pôles), seule une pièce polaire écrit les informations : en d'autres termes, il n'y a qu'un seul pôle d'écriture, la seconde pièce polaire (le second pôle) permettant uniquement la circulation du flux magnétique créé par le bobinage du transducteur.

Les dispositifs d'écritures à haute densité du type de celui décrit ci-dessus, permettent d'obtenir des densités longitudinales de l'ordre de 2 à 4 000 changements de sens de magnétisation par centimètre, et des densités radiales de l'ordre de 4 à 500 pistes par centimètre.

Ces densités obtenues ne sont pas suffisantes par rapport aux performances qu'on cherche à obtenir dans les mémoires magnéto-optiques.

On connaît par ailleurs d'autres transducteurs permettant d'écrire des informations selon le mode perpendiculaire, avec des densités d'enregistrement satisfaisantes. L'un de ceux-ci est décrit dans le brevet US 4,222,084, de Nakagawa et al. et est adapté à l'enregistrement d'informations sur bande magnétique.

Ce transducteur comprend deux pôles d'écritures reliés entre eux par une partie de liaison magnétique. Ils sont parallèles entre eux, perpendiculaires au support d'enregistrement et disposés d'un même côté par rapport à celui-ci. Le transducteur comprend en outre un pôle magnétique auxiliaire disposé de l'autre côté du support par rapport aux deux pôles d'écritures. Il existe donc un premier entrefer entre l'un des pôles d'écriture et le pôle auxiliaire et un second entrefer entre l'autre pôle d'écriture et ce même pôle auxiliaire.

Par ailleurs, les deux pôles d'écriture sont séparés par un espace interpolaire suffisamment grand pour que la totalité du flux magnétique créé par les deux pôles d'écriture passe par les deux entrefers disposés entre ceux-ci et le pôle auxiliaire de manière à écrire les informations sur le support de la manière la plus efficace et la plus précise possible. Cet espace interpolaire n'est donc pas assimilable à un entrefer.

Le transducteur précédent, s'il permet d'obtenir des densités suffisamment élevées pour l'écriture d'informations sur bandes magnétiques, a du fait de sa structure, des dimensions trop importantes pour pouvoir écrire des informations à densités radiales très élevées sur disques magnétiques en vue de leur utilisation dans les mémoires magnéto-optiques.

La présente invention permet de remédier à cet inconvénient et concerne un dispositif d'écriture d'informations sur un support magnétique bien adapté pour l'enregistrement sur disque magnétique et qui permet dans ce cas d'obtenir des densités radiales de l'ordre de 5 000 pistes par centimètre et linéiques de 10 000 changements de sens de magnétisation par centimètre. Ceci est obtenu en utilisant un transducteur magnétique ayant deux pôles d'écriture, écrivant simultanément et radialement sur le support, des domaines magnétiques adjacents d'aimantations égales et opposées. Si on appelle l'ensemble de ces deux domaines magnétiques adjacents d'aimantation opposée « Grand domaine magnétique », une piste est donc constituée d'une pluralité de grands domaines magnétiques successifs de longueur variable et de nature opposée : cela signifie qu'un « grand domaine magnétique » où les aimantations dans un sens radial donné (pour un disque), sont successivement négative puis positive, est entouré par deux « grands domaines magnétiques » où les aimantations sont, dans le même sens radial, successivement positive et négative.

On montre que la densité radiale (et donc surfacique) obtenue est d'autant plus élevée que la dimension des pôles d'écriture mesurée dans le sens radial (l'épaisseur des pôles) est faible. On peut ainsi atteindre des densités de l'ordre de grandeur de celles indiquées ci-dessus avec des épaisseurs de l'ordre de un à quelques microns, couramment atteintes dans les transducteurs magnétiques intégrés.

Ces « grands domaines » magnétiques ainsi écrits, par le dispositif selon l'invention, ont l'avantage d'être magnétiquement auto-stabilisants. En outre, on peut lire les deux domaines constituant chacun de ceux-ci simultanément, au moyen d'un dispositif magnéto-optique approprié du type d'un de celui décrit dans la demande de brevet FR-A-2 526 987 déposée le 14 Mai 1982 par la Compagnie demanderesse sous le titre « Procédé opto-électronique de lecture d'informations contenues sur un support magnétique et circuit pour le mettre en œuvre ». On montre que cela permet d'améliorer le rapport signal/bruit du dispositif de lecture des informations contenues sur le support.

Selon l'invention, le dispositif d'écriture d'informations sur un support magnétique (SMI) constitué par l'association de la couche magnétique d'enregistrement (CM₁) du support formé d'un matériau magnétique anisotrope ayant l'axe de facile aimantation perpendiculaire à sa surface et d'au moins un transducteur magnétique (TMI) composé d'un circuit magnétique associé à un bobinage électrique (BOBI) et comportant un entrefer (GI) disposé entre deux pôles d'écriture de polarisation opposée (PEI₁ et PEI₂), et réalisés en couches minces réunies à une extrémité de manière à ce que ces deux pôles soient couplés magnétiquement et disposés à l'autre extrémité voisine du support de façon à former l'entrefer (GI), les deux pôles disposés d'un même côté du support ayant leur plan perpendiculaire à ce dernier, le support (SMI) défilant suivant une direction donnée (F$_i$), les informations étant écrites à l'intérieur d'au moins une piste, est caractérisé en ce que, dans le but d'accroître la densité des pistes écrites par unité de longueur selon une direction perpendiculaire au sens de défilement des informations, la grande dimension de l'entrefer est disposée parallèlement à la direction de défilement du support, les couches minces étant également parallèles à cette dernière, les informations de la piste étant écrites au moyen du champ h$_y$ normal au support, créé par les deux pôles, au voisinage immédiat et en regard de ceux-ci.

Les caractéristiques et avantages de l'invention ressortiront plus clairement de la description qui suit faite en référence aux dessins annexés.

Sur ces dessins :

Les figures 1, 2, 3 montrent un dispositif d'écriture à haute densité selon l'art antérieur ;

La figure 1 étant une vue de trois quarts en perspective ;

La figure 2 étant une vue de dessous du transducteur magnétique d'écriture du dispositif selon l'art antérieur, vue effectuée depuis le support d'enregistrement ;

La figure 3 est une vue de côté en coupe, prise dans un plan normal au support d'enregistrement magnétique et parallèle au sens de défilement de celui-ci ;

Les figures 4 et 5 illustrent le principe du dispositif d'écriture à haute densité selon l'invention ;

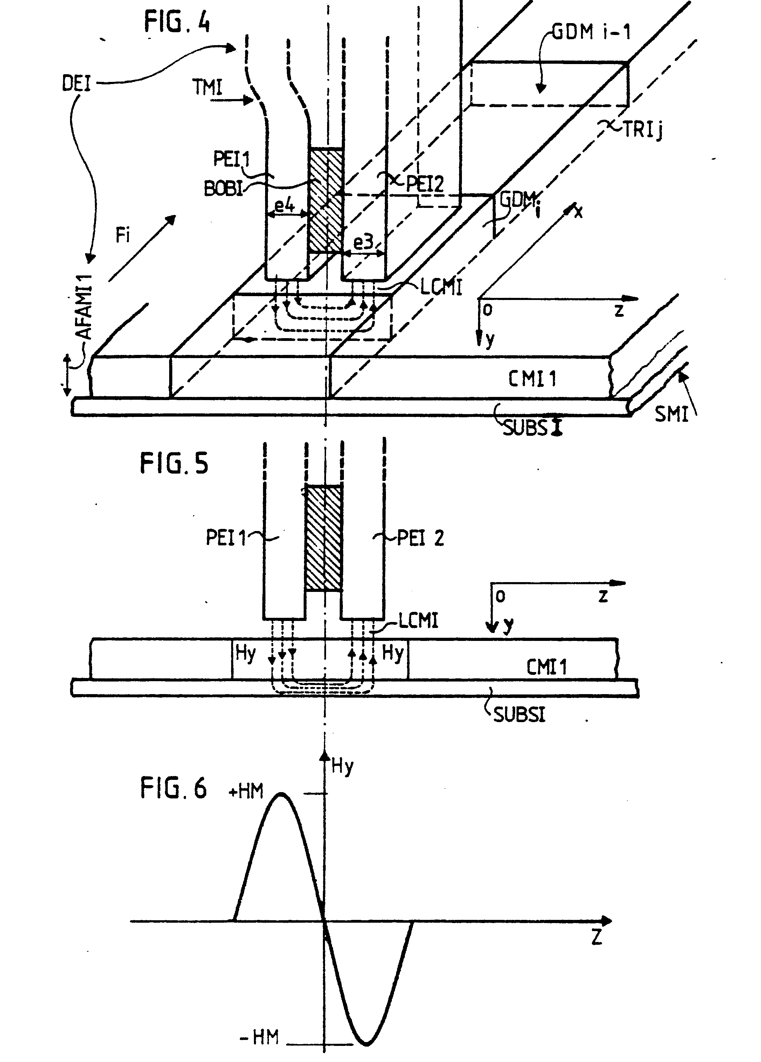

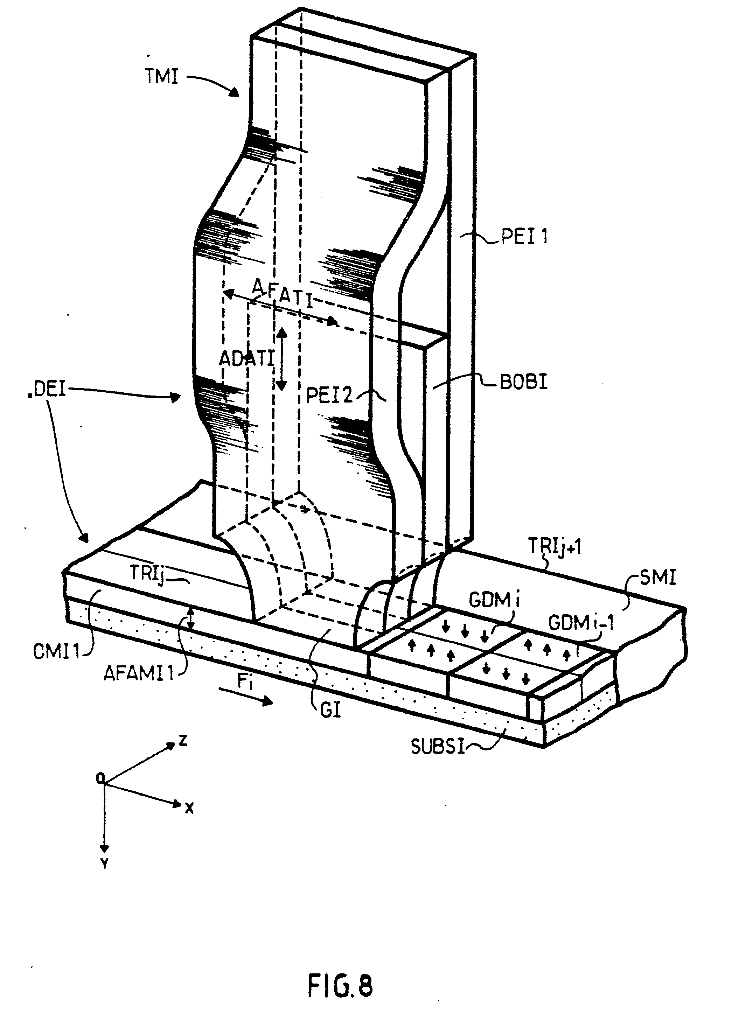

La figure 4 étant une vue de trois quarts en perspective ;

La figure 5 étant une vue en coupe de côté, prise dans un plan normal au support d'enregistrement magnétique et perpendiculaire au sens de défilement des informations ;

La figure 6 montre la répartition du champ magnétique créé par les deux pôles d'écriture du transducteur magnétique du dispositif selon l'invention, champ magnétique normal à la surface du support, cette répartition étant considérée dans une section perpendiculaire au sens de défilement des informations ;

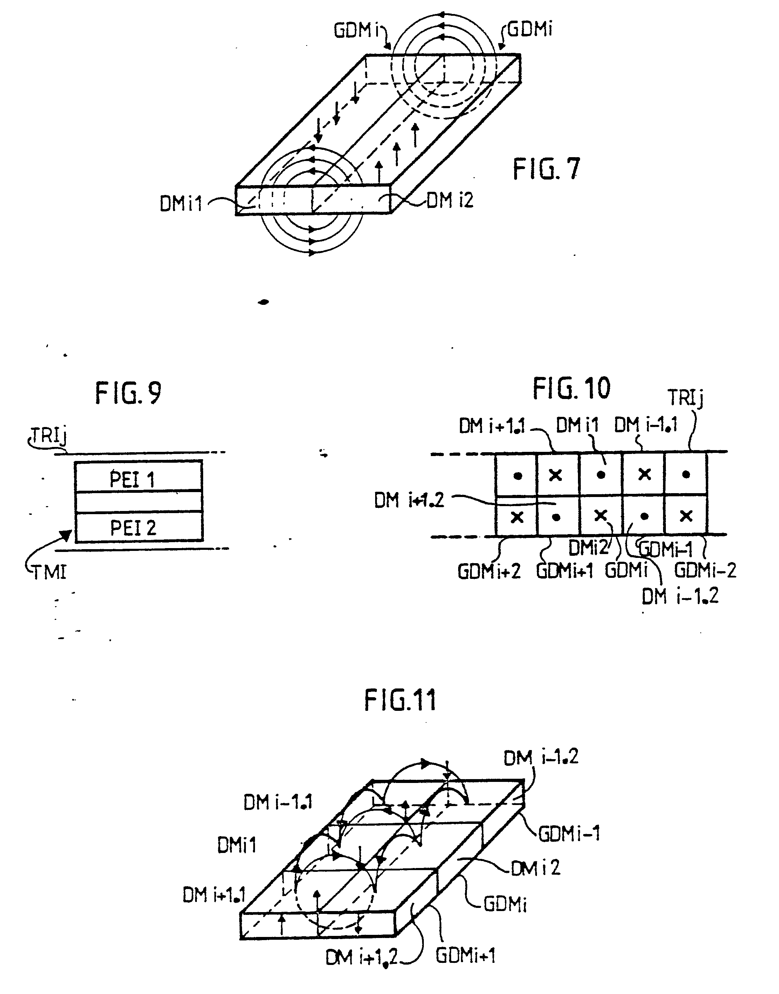

La figure 7 montre un grand domaine magnétique enregistré par le dispositif selon l'invention sur le support magnétique, ce grand domaine étant constitué de deux domaines adjacents, considérés dans un sens perpendiculaire au sens de défilement du support, où les aimantations sont de sens opposé ;

La figure 8 montre un mode de réalisation préféré du dispositif d'écriture à haute densité selon l'invention, ce dispositif étant montré de trois quarts en perspective ;

La figure 9 montre le dispositif de la figure 8 vu de dessous à partir du support d'enregistrement magnétique ;

La figure 10 montre, vue de dessus, une portion de piste enregistrée par le dispositif d'écriture à haute densité selon l'invention, montrant un ensemble de grands domaines magnétiques successifs d'une piste d'enregistrement du support ;

La figure 11 illustre les avantages d'un ensemble de grands domaines successifs d'une piste, écrits par le dispositif selon l'invention.

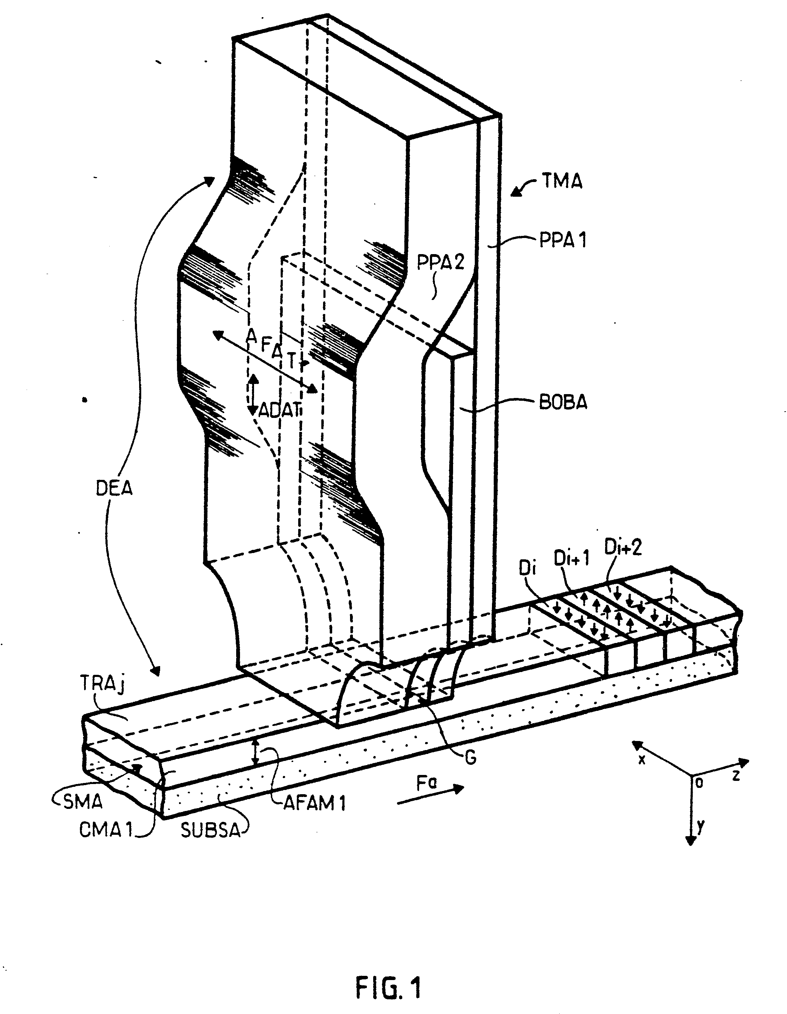

Afin de mieux comprendre les principes de constitution et de fonctionnement du dispositif d'écriture à haute densité d'informations sur un support, selon l'invention, il est utile de faire quelques rappels sur les principes de constitution et de fonctionnement des dispositifs d'écriture à haute densité selon l'art antérieur. Ces rappels sont illustrés par les figures 1, 2, 3 qui montrent un dispositif d'écriture selon l'art antérieur DEA, permettant d'écrire sur un support d'enregistrement SMA.

Le dispositif DEA comprend :

d'une part, un transducteur magnétique, de préférence intégré, TMA ;

la couche magnétique d'enregistrement CMAI.

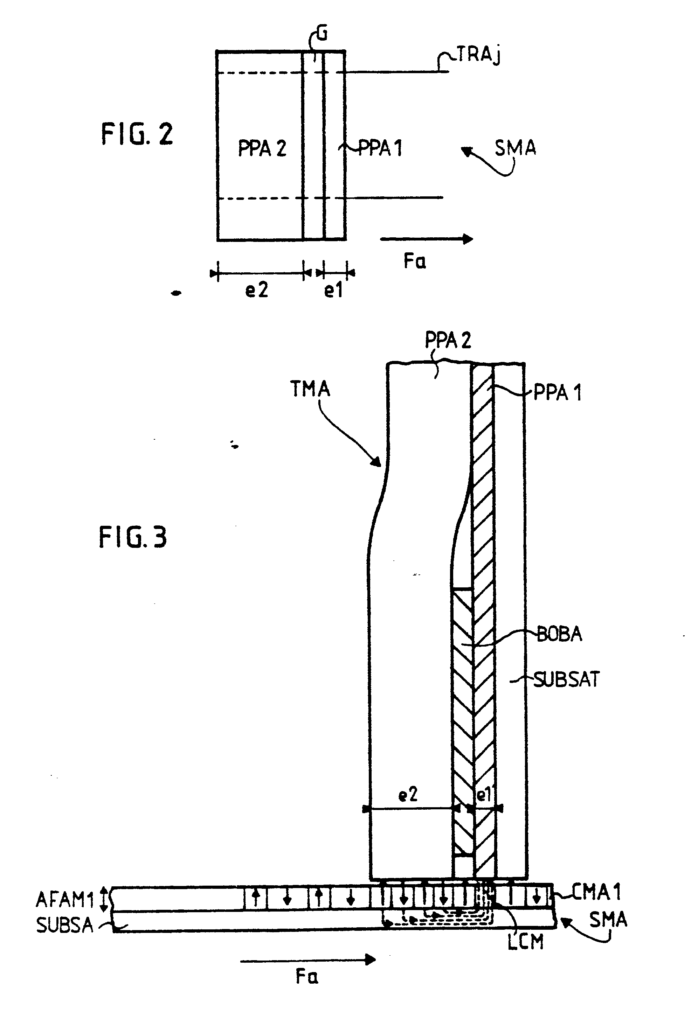

Ainsi qu'on peut le voir plus particulièrement aux figures 1 et 3, la couche magnétique d'enregistrement CMAI est déposée sur un substrat SUBSA, appartenant au support SMA.

La couche CMAI est constituée d'un matériau magnétique anisotrope dont l'axe de facile aimantation est AFAMI. Il est orienté perpendiculairement à la surface de la couche, selon l'axe Oy (voir figure 1). Le transducteur TMA est de préférence du type intégré, et est par exemple analogue à celui qui fait partie du dispositif d'écriture selon l'art antérieur décrit dans le brevet français N° 78.17 641 précité.

Le transducteur TMA comprend :
une première pièce polaire PPA1 ;
une seconde pièce polaire PPA2 ;
un bobinage BOBA.

Les deux pièces polaires PPA1 et PPA2 sont disposées d'un même côté du support d'informations SMA et présentent au voisinage de celui-ci l'entrefer G dont la grande dimension (longueur) est perpendiculaire au sens de défilement des informations Fa. Les pièces polaires sont formées d'une pluralité de couches magnétiques minces séparées les unes des autres par des couches minces isolantes. La pièce polaire PPA1 est disposée sur un substrat amagnétique et isolant SUBSAT (seulement représenté à la figure 3 et non représenté à la figure 1 pour rendre celle-ci plus claire).

Le bobinage BOBA est formé d'une succession de couches minces conductrices et isolantes superposées et enserrées par les deux pièces polaires PPA1 et PPA2.

La pièce polaire PPA1 a de préférence une épaisseur (dimension mesurée selon une direction parallèle au sens de défilement Fa) e1, très inférieure à l'épaisseur e2 de la pièce polaire PPA2.

Le plus souvent les pièces polaires PPA1 et PPA2 sont réalisées en matériau magnétique anisotrope. L'axe de facile aimantation des pièces polaires est l'axe AFAT parallèle à la direction Ox (c'est-à-dire normal au sens de défilement Fa et parallèle au plan du support SMA). L'axe de difficile aimantation est l'axe ADAT normal au plan du support magnétique d'enregistrement SMA.

Pour écrire les informations d'une piste TRAj du support SMA, celui-ci défilant dans le sens de la flèche Fa à une vitesse donnée, on envoie dans le bobinage BOBA un courant représentatif des informations à écrire, formé d'une suite d'impulsions positives et négatives de durée variable. Ce courant provoque la génération d'un flux magnétique dans les pièces polaires PPA1 et PPA2, qui se ferme à travers la couche magnétique CMA1 et le substrat SUBSA de la manière indiquée à la figure 3 par les lignes de champ magnétique LCM. En regard de la pièce polaire PPA2, le champ magnétique a une intensité beaucoup plus faible qu'en regard de la pièce polaire PPA1, puisque d'une part, l'épaisseur e2 est plus grande que l'épaisseur e1, et que l'on peut estimer d'autre part que le flux magnétique qui circule dans l'ensemble constitué par les deux pièces polaires PPA1 et PPA2 la couche magnétique CMA1 et le substrat SUBSA est conservatif. La couche magnétique CMA1 ne peut donc être saturée en regard de la pièce polaire PPA2.

On voit donc bien, ainsi qu'il a été dit plus haut, que dans un dispositif d'écriture DEA selon l'art antérieur, seule la pièce polaire aval PPA1, écrit les informations sur le support d'enregistrement magnétique SMA.

Les domaines magnétiques écrits par la pièce polaire PPA1 sont par exemple représentés aux figures 1 et 3. On voit que dans ces domaines (qui sont généralement de longueur variable) l'induction magnétique est dirigée normalement à la surface du support SMA et que les aimantations dans des domaines voisins, tels que les domaines Di et Di + 1 d'une part, Di + 1 et Di + 2 d'autre part, sont opposées.

Le dispositif d'écriture à haute densité DEI selon l'invention, dont le schéma de principe est illustré par les figures 4 et 5, permet d'écrire des informations sur un support d'enregistrement magnétique avec des densités radiale et linéique considérablement supérieures à celles obtenues par les dispositifs de l'art antérieur tels que DEA.

Ceci est obtenu en utilisant un transducteur magnétique TMI, dont le bobinage est BOBI, ayant deux pôles d'écriture adjacents PEI1 et PEI2, par exemple de dimensions identiques, de polarité opposée. Ils agissent simultanément sur la couche d'enregistrement magnétique, CMI1, identique à CMA1, en fournissant respectivement des champs magnétiques d'écriture normaux à la surface, de polarité opposée, et ce selon une direction parallèle à la surface de la couche et perpendiculaire à la direction de défilement du support, c'est-à-dire radialement si le support est un disque magnétique.

Il est clair que les deux pôles d'écriture PEI1, PEI2 constituent le circuit magnétique du transducteur TMI, qui comporte l'entrefer GI.

Aux figures 4 et 5, le transducteur TMI et le support d'enregistrement SMI sont repérés par rapport à un système d'axes Ox Oy Oz rectangulaires. On suppose que SMI est un disque magnétique défilant dans le sens de la flèche Fi, parallèle à l'axe Ox. Oz est donc l'axe parallèle à la surface de la couche et perpendiculaire à la direction de défilement et Oy l'axe perpendiculaire à la surface de la couche.

Ainsi qu'on peut le voir aux figures 4 et 5, les deux pôles d'écriture adjacents PEI1 et PEI2 sont d'épaisseurs respectives e3 et e4 (mesurées selon la direction Oz) quasiment égales, par exemple de l'ordre de un à quelques microns. Le support d'enregistrement magnétique SMI est strictement identique au support d'enregistrement SMA montré aux figures 1 et 3, c'est-à-dire qu'il comprend la couche magnétique d'enregistrement anisotrope CMI1 et un substrat SUBSI.

L'axe de facile aimantation AFAMI1 de la couche d'enregistrement CMI1 est normal à la surface de la couche.

En considérant la répartition du champ magnétique Hy normal à la surface du support, selon une direction parallèle à Oz, c'est-à-dire radialement, répartition obtenue au voisinage immédiat des deux pôles d'écriture PEI1 et PEI2 (c'est-à-dire également au voisinage immédiat de la surface de la couche CMI1) on obtient la courbe de la figure 6. On voit que le pôle d'écriture PEI1 fournit un champ magnétique positif d'amplitude maximum HM (obtenu sensiblement au milieu de la pièce polaire PEI1), alors que le pôle d'écriture PEI fournit un champ magnétique Hy négatif de valeur maximale — HM. La valeur absolue des champs HM et — HM est sensiblement la même.

Le fonctionnement du dispositif d'écriture à haute densité d'informations sur un support magnétique selon l'invention DEI est le suivant :

On envoie dans le bobinage BOBI un courant représentatif des informations à écrire, formé d'une suite d'impulsions de courant positive et négative de durée variable. On suppose par exemple que l'on envoie à un moment donné dans le bobinage BOBI une impulsion de courant positif. Cette impulsion de courant provoque la génération d'un flux magnétique dans les pôles d'écriture PEI1 et PEI2, qui passe à travers la couche magnétique CMI1 du support d'enregistrement SMI. Du fait que l'axe de facile aimantation de la couche CMI1, à savoir AFAMI1 est perpendiculaire à la surface du support d'enregistrement SMI, le champ magnétique au voisinage des deux pôles d'écriture PEI1 et PEI2, au droit de ceux-ci est canalisé dans la direction de l'axe de facile aimantation AEAMI1 et il a pratiquement la même concentration au voisinage de chacun des pôles d'écriture PEI1 et PEI2, puisque les épaisseurs e3 et e4 sont sensiblement égales. Le champ Hy de fuite en regard des deux pôles d'écritures PEI1 et PEI2 est donc quasiment perpendiculaire au plan de la couche CMI1 et sature celle-ci selon son axe de facile aimantation AFAMI1. Le champ Hy positif, créé par le pôle d'écriture PEI1 sature positivement la couche magnétique CMI1 alors que le champ Hy créé par le pôle d'écriture PEI2 qui est négatif sature négativement la couche CMI1. Les lignes de flux sont indiquées par les lignes de champ magnétique LCMI (voir figures 4 et 5), le flux magnétique se refermant par exemple dans le substrat SUBSI.

Lorsque le support d'enregistrement SMI défile dans le sens de la flèche Fi devant le transducteur TMI, on enregistre une piste TRIj d'informations. Celle-ci comporte une pluralité de « Grands domaines magnétiques » GDMi — 1, GDMi, GDMi + 1, etc. ..., analogues aux « Grands domaines magnétiques » GDMi représentés à la figure 7 (à la longueur près). Chacun d'eux comporte en fait deux domaines magnétiques d'aimantations respectivement opposées (l'une d'aimantation positive, l'autre d'aimantation négative), qui sont adjacents selon une direction radiale. Ainsi, le Grand domaine GDMi est composé de deux domaines DMi1 et DMi2 d'aimantations respectives positive et négative. On montrerait de même que le grand domaine GDMi + 1 comporte deux domaines DMi + 1 · 1, DMi + 1 · 2 d'aimantations opposées. Le domaine DMi + 1 · 1 a une aimantation négative, alors que le domaine DMI + 1 · 2 a une aimantation positive.

Un raisonnement analogue à celui qui vient d'être fait pour le domaine GDMi + 1 pourrait être fait pour le domaine GDMi — 1.

A la figure 10, on a représenté cinq grands domaines voisins de la piste TRIj, à savoir les domaines GDMi + 2, GDMi + 1, GDMi, GDMi — 1, GDMi — 2, ces domaines étant vus de dessus. On a représenté le signe des aimantations de chacun des deux domaines constituant ces grands domaines, les aimantations négatives étant symbolisées par un point, alors que les aimantations positives sont représentées par une croix. On voit donc que dans les domaines qui sont situés dans la partie supérieure de la figure et font partie des « Grands domaines » GDMi + 2 à GDMi — 2, les aimantations sont successivement négative, positive, négative, positive et négative positive. Inversement dans les domaines qui sont situés dans la partie inférieure de la figure 10 et appartiennent aux mêmes « Grands domaines » que précédemment, l'aimantation est successivement positive, négative, positive, négative et positive. On voit immédiatement l'avantage évident du dispositif d'écriture selon l'invention, à savoir le fait que les grands domaines magnétiques obtenus sur chaque piste TRIj du support SMI sont magnétiquement auto-stabilisants. Ainsi si l'on considère le grand domaine GDMi de la figure 7, on voit que vers le haut les lignes de flux vont du domaine magnétique DMi2 vers le domaine DMi1 en se refermant à l'intérieur de celui-ci et que vers le bas les lignes de champ magnétique vont du domaine magnétique DMi1 vers le domaine magnétique DMi2 en se refermant à l'intérieur de celui-ci.

On voit donc que les informations écrites sur le support SMI par le dispositif d'écriture à haute densité selon l'invention resteront parfaitement stables dans le temps.

De plus, ainsi qu'il a été dit plus haut, les deux domaines (DMi1, DMi2) d'un Grand Domaine (GDMi) pourront être lus simultanément par un dispositif magnéto-optique du type de celui décrit dans la demande de brevet n° 82.08406 précitée, ce qui permettra d'améliorer le rapport signal/bruit du dispositif de lecture des informations du support, et de diminuer le taux d'erreur de lecture.

On montre que la densité radiale (et donc surfacique) est d'autant plus élevée que les épaisseurs e3 et e4 sont faibles.

On montre enfin que le gradient de champ magnétique Hy dans la direction Oz, au voisinage du centre de l'entrefer GI, à savoir $\delta Hy/\delta z$ joue un rôle dans la précision avec laquelle sont définis les domaines adjacents tels que DMI1, DMI2. En particulier, plus $\delta Hy/\delta z$ est élevé, plus la transition magnétique entre les deux domaines DMI1 et DMI2 est définie de façon précisée. De plus, on montre que plus $\delta Hy/\delta z$ est élevé, plus le niveau de bruit à la lecture des deux domaines est faible.

Les figures 8 et 9 montrent un exemple de réalisation préféré du dispositif d'écriture selon l'invention où le transducteur TMI est un transducteur de type intégré. Les pôles d'écriture PEI1 et PEI2 sont réalisés en couches minces c'est-à-dire formés d'une succession de couches minces magnétiques et amagnétiques, le bobinage BOBI étant réalisé sous forme d'un empilement de couches minces conductrices et isolantes. De préférence, les pôles d'écriture PEI1 et PEI2 sont réalisés en matériau magnétique anisotrope, l'axe de facile aimantation AFATI étant parallèle au support SMI et au sens de défilement Fi des informations, alors que l'axe de difficile aimantation ADATI est normal au support SMI. L'utilisation d'un matériau anisotrope ayant les axes de facile et difficile aimantation orientés comme indiqué ci-dessus permet d'obtenir une bonne directivité du champ Hy selon la direction Oy et concourt ainsi à l'obtention de densités radiale et linéique plus élevées.

Ainsi qu'on peut le voir à la figure 8, les deux pôles d'écriture présentent un rétrécissement au voisinage de l'entrefer GI, ce qui améliore le rapport entre l'énergie électrique fournie au bobinage BOBI et l'énergie magnétique fournie par le transducteur au support d'enregistrement SMI. On voit de même que, le transducteur TMI est disposé par rapport au support d'enregistrement de telle manière que la grande dimension de l'entrefer (également appelée longueur de l'entrefer) soit parallèle au sens de défilement des informations.

Il est clair que l'invention s'applique à différentes variantes du dispositif d'écriture d'informations sur support magnétique, parmi lesquelles on peut noter :

1. celles pour lesquelles on agit sur les dimensions et profils des deux pôles d'écriture, l'épaisseur e3 étant par exemple inférieure à l'épaisseur e4,

2. celles comprenant une pluralité de transducteurs, de préférence identiques, analogues au transducteur TMI de la figure 8, disposés les uns à côté des autres selon la direction Oz ; on obtient ainsi un dispositif multitransducteurs pouvant écrire simultanément une pluralité de pistes voisines telles que la piste TRIj représentée aux figures 8 et 10.

Il est évident qu'on peut également combiner les différentes variantes de l'invention décrites ci-dessus sans sortir du cadre de celle-ci.

## Revendications

1. Dispositif d'écriture d'informations sur un support magnétique (SMI) constitué par l'association de la couche magnétique d'enregistrement (CMI$_1$) du support formé d'un matériau magnétique anisotrope ayant l'axe de facile aimantation perpendiculaire à sa surface et d'au moins un transducteur magnétique (TMI) composé d'un circuit magnétique associé à un bobinage électrique (BOBI) et comportant un entrefer (GI) disposé entre deux pôles d'écriture de polarisation opposée (PEI$_1$ et PEI$_2$), et réalisés en couches minces réunies à une extrémité de manière à ce que ces deux pôles soient couplés magnétiquement et disposés à l'autre extrémité voisine du support de façon à former l'entrefer (GI), les deux pôles disposés d'un même côté du support ayant leur plan perpendiculaire à ce dernier, le support (SMI) défilant suivant une direction donnée (F$_i$), les informations étant écrites à l'intérieur d'au moins une piste, caractérisé en ce que, dans le but d'accroître la densité des pistes écrites par unité de longueur selon une direction perpendiculaire au sens de défilement des informations, la grande dimension de l'entrefer est disposée parallèlement à la direction de défilement du support, les couches minces étant également parallèles à cette dernière, les informations de la piste étant écrites au moyen du champ h$_y$ normal au support, créé par les deux pôles, au voisinage immédiat et en regard de ceux-ci.

2. Dispositif d'écriture selon la revendication 1 caractérisé en ce que les couches minces sont réalisées en un matériau magnétique anisotrope dont l'axe de facile aimantation est parallèle au sens de défilement des informations et au plan du support, la direction de difficile aimantation étant perpendiculaire au plan du support d'enregistrement, le champ H$_y$ ayant une courbe de répartition selon une direction O$_z$ perpendiculaire à la direction de défilement du support qui passe par deux extremums opposés en regard de chacun des pôles en variant de manière continue entre les deux extremums, en ayant une valeur nulle au milieu de l'espace séparant ces deux pôles, le gradient de champ dh$_y$/dz ne s'annulant pas entre ces deux valeurs.

3. Dispositif selon la revendication 1 ou 2 caractérisé en ce que les informations écrites par le champ H$_y$ sur la piste sont formées selon la direction de défilement par une succession de « grands domaines magnétiques » alternativement de nature opposée, chaque « grand domaine » comprenant selon la direction Oz deux domaines magnétiques adjacents d'aimantation opposée.

4. Mode d'écriture d'informations sur un support d'enregistrement magnétique défilant selon une direction donnée et où les informations sont contenues à l'intérieur d'une pluralité de pistes caractérisé en ce que chaque piste contient selon ladite direction, une succession de « Grands domaines magnétiques » alternativement de nature opposée, chaque « Grand domaine » comprenant, selon une direction normale à ladite direction donnée, deux domaines adjacents d'aimantation opposée.

## Claims

1. Device for recording data on a magnetic carrier (SMI) consisting of the association of the magnetic recording layer (CMI$_1$) of the carrier formed of an anisotropic magnetic material having the easy magnetisation axis perpendicular to its surface and of at least one magnetic transducer (TMI) comprising a magnetic circuit associated with an electrical coil (BOBI) and comprising a gap (GI) situated between two recording poles of opposite polarity (PEI$_1$ and PEI$_2$), and produced in thin layers joined together at one extremity in a manner such that these two poles are magnetically coupled and situated at the other extremity close to the carrier in such manner as to form the gap (GI), the two poles situated at the same side of the carrier having their plane perpendicular to this latter, the carrier (SMI) travelling along a given direction (F$_i$), the data being recorded within at least one track, characterised in that for the purpose of increasing the density of the tracks recorded per unit of length along a direction perpendicular to the direction of travel of the data, the large dimension of the gap is arranged parallel to the direction of travel of the carrier, the thin layers equally being parallel to this latter, the track data being recorded by means of the field h$_y$ normal to the carrier, created by the two poles, in the immediate vicinity and opposite the latter.

2. Recording device according to claim 1, characterised in that the thin layers are produced from an anisotropic magnetic material of which the easy magnetisation axis is parallel to the direction of travel of the data and to the plane of the carrier, the direction of difficult magnetisation being perpendicular to the plane of the record carrier, the field H$_y$ having a distribution curve along a direction O$_z$ perpendicular to the direction of travel of the carrier which passes through two opposed extremes opposite each one of the poles whilst varying in a continuous manner between the two extremes, whilst having a zero value at the centre of the space separating these two poles, the field gradient dh$_y$/dz not being nullified between these two values.

3. Device according to claim 1 or 2, characterised in that the data recorded by the field H$_y$ on the track are formed along the direction of travel by a succession of « large magnetic areas » alternately of opposite nature, each « large area » comprising two adjacent magnetic areas of opposite magnetisation along the direction Oz.

4. Method of recording data on a magnetic record carrier travelling along a given direction and in which the data are contained within a plurality of tracks, characterised in that each track comprises along the said direction a succession of « large magnetic areas » alternately of opposite nature each « large area » comprising, along a direction normal to the said given direction, two adjacent areas of opposite magnetisation.

## Patentansprüche

1. Vorrichtung zum Schreiben von Informationen auf einen magnetischen Träger (SMI), die aus der Zuordnung der magnetischen Aufnahme-schicht (CMI$_1$) des Trägers aus einem anisotropen, magnetischen Material, dessen Achse der leichten Magnetisierbarkeit senkrecht zu seiner Oberfläche liegt, zu mindestens einem magnetischen Aufnehmer (TMI) gebildet ist, der aus einem zu einer elektrischen Spule (BOBI) gehörenden Magnetkreis zusammengesetzt ist und einen Luftspalt (GI) zwischen zwei entgegenge-setzt polarisierten Schreibpolen (PEI$_1$ und PEI$_2$) aufweist, sowie aus dünnen Schichten hergestellt ist, die sich an einem Ende so vereinigen, daß die beiden Pole magnetisch gekoppelt und am anderen, dem Träger benachbarten Ende so angeordnet sind, daß sie einen Luftspalt (GI) bilden, wobei die auf derselben Seite des Trägers liegenden Pole mit ihrer Ebene senkrecht zu letzterem ausgerichtet sind, der Träger (SMI) in einer gege-benen Richtung (F$_i$) entlang vorbeiläuft und die Informationen in das Innere mindestens einer Spur geschrieben werden, dadurch gekennzeichnet, daß, um die Dichte der Schreibspuren pro Längeneinheit in senkrechter Richtung zur Laufrichtung der Informationen zu erhöhen, die große Abmessung des Luftspalts parallel zur Laufrichtung des Trägers liegt, wobei die dünnen Schichten gleichermaßen parallel zur letzteren sind und die Spurinformationen mittels einem zum Träger normalen Feld h$_y$ geschrieben werden, das durch die beiden Pole in ihrer unmittelbaren Umgebung und ihnen gegenüberliegend erzeugt wird.

2. Schreibvorrichtung nach Anspruch 1, dadurch gekennzeichnet, daß die dünnen Schichten aus einem magnetischen, anisotropen Material hergestellt sind, dessen Achse der leichten Magnetisierbarkeit parallel zur Laufrichtung der Informationen und in der Trägerebene liegt, wobei die schwer magnetisierbare Richtung senkrecht zur Aufnahmeträgerebene ist, das Feld H$_y$ bezüg-lich einer zur Laufrichtung des Trägers senkrechten Richtung O$_z$ eine Verteilungskurve hat, die durch zwei entgegengesetzte, je einem der beiden Pole gegenüberliegende Extrema läuft und zwischen diesen beiden Extrema kontinuierlich variiert, wobei ihr Wert in der Mitte des Raums, der die beiden Pole trennt, Null ist und der Feldgra-dient dh$_y$/dz zwischen diesen beiden Werten nicht verschwindet.

3. Vorrichtung nach Anspruch 1 oder 2, dadurch gekennzeichnet, daß die durch das Feld H$_y$ auf die Spur geschriebenen Informationen in Laufrichtung durch eine Folge « großer magneti-scher Gebiete », die abwechseld entgegenge-setzter Art sind, gebildet werden, wobei jedes « große Gebiet » in der Richtung Oz zwei benachbarte magnetische Gebiete entgegengesetzter Magnetisierung enthält.

4. Verfahren zum Schreiben von Informationen auf einen in einer gegebenen Richtung vorbeilau-fenden Magnetaufnahmeträger, wobei die In-formationen im Inneren mehrerer Spuren enthalten sind, dadurch gekennzeichnet, daß jede Spur in besagter Richtung eine Folge « großer magnetischer Gebiete » enthält, die abwechselnd entgegengesetzter Art sind, wobei jedes « große Gebiet » in einer zur besagten Richtung normalen Richtung zwei benachbarte Gebiete entgegenge-setzter Magnetisierung enthält.

0 107 589

FIG. 1

1

FIG. 2

FIG. 3

2

FIG. 4

FIG. 5

FIG. 6

FIG.8

4

FIG. 7

FIG. 9

FIG. 10

FIG.11